(19) Europäisches Patentamt
European Patent Office
Office européen des brevets

(11) **EP 2 903 264 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(51) Int Cl.:
***H04N 13/232*** *(2018.01)*

(21) Anmeldenummer: **14455007.6**

(22) Anmeldetag: **17.12.2014**

(54) **Verfahren zur Ermittlung des Lichtfeldes eines Gegenstands**

Method for determining the light field of an object

Procédé de détermination du champ lumineux d'un objet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2014 AT 500722014**

(43) Veröffentlichungstag der Anmeldung:
**05.08.2015 Patentblatt 2015/32**

(73) Patentinhaber: **AIT Austrian Institute of Technology GmbH**
**1220 Wien (AT)**

(72) Erfinder:
• **Huber-Mörk, Reinhold**
**1220 Wien (AT)**
• **Stolc, Svorad**
**831 01 Bratislava (SK)**
• **Mayer, Konrad**
**1230 Wien (AT)**

(74) Vertreter: **Wildhack & Jellinek Patentanwälte**
**Landstraßer Hauptstraße 50**
**1030 Wien (AT)**

(56) Entgegenhaltungen:
**WO-A1-2009/115108**

• **Marc Levoy ET AL: "Light Field Rendering (Levoy and Hanrahan", , 1. Juli 1996 (1996-07-01), Seiten 1-12, XP055077048, Gefunden im Internet: URL:http://graphics.stanford.edu/papers/light/light-lores-corrected.pdf [gefunden am 2013-08-29]**

## Beschreibung

Die Erfindung betrifft ein Verfahren zur Ermittlung des Lichtfeldes eines Gegenstandes mittels einer einen Flächensensor aufweisenden Bildaufnahmeeinheit gemäß dem Oberbegriff des Patentanspruches 1. Der Hintergrund der Erfindung liegt darin, einzelne Gegenstände nicht bloß zweidimensional abzubilden, sondern dass von diesen Gegenständen abgestrahlte Lichtfeld zu ermitteln. Die Kenntnis über das vom jeweiligen Gegenstand abgestrahlte Lichtfeld kann zu unterschiedlichen Zwecken eingesetzt werden. So ist es möglich, von dem Gegenstand ein quasi dreidimensionales Abbild zu erhalten oder einen Gegenstand in optimaler Schärfe abzubilden. Darüber hinaus sind selbstverständlich auch noch viele weitere Anwendungen des vom Gegenstand abgegebenen Bewegungslichtfelds bekannt.

Aus dem Stand der Technik sind zur Aufnahme von Bewegungslichtfeldern viele unterschiedliche Verfahren bekannt. So werden beispielsweise Multikamera-Arrays vorgeschlagen, die eine Vielzahl unterschiedlicher Aufnahmen desselben Gegenstandes durchführen um anschließend ein Lichtfeld des Gegenstandes zu ermitteln. Es werden auch verschiedene optische Systeme vorgeschlagen, die es ermöglichen einen Gegenstand aus mehreren verschiedenen Blickwinkeln aufzunehmen. So kann beispielsweise mittels einem plenoptischen Mikrolinsenarray eine Vielzahl von Abbildungen aus geringfügig versetzten Aufnahmepunkten erreicht werden. Zu diesem Zweck wird ein Array von einzelnen so genannten Mikrolinsen in den Aufnahmebereich der Kamera gesetzt, wodurch man ein zweidimensionales Bild erhält, das eine rasterförmig angeordnete Anzahl von Teilbereichen aufweist, die das Lichtfeld des jeweiligen Gegenstandes angeben. Das Dokument Marc Levoy ET AL: "Light Field Rendering (Levoy and Hanrahan",, 1. Juli 1996 (1996-07-01), Seiten 1-12, offenbart ein alternatives Verfahren zur Ermittlung des Lichtfeldes eines Gegenstandes. Alle diese Verfahren haben wesentliche Nachteile, insbesondere ist die Auflösung der Bilder äußerst gering und die Datenmengen der erstellten Lichtfelder ist sehr groß. Ein weiterer Nachteil der erwähnten Methoden ist, daß die Anzahl der unterschiedlichen Blickwinkel vorgegeben ist und nicht flexibel verändert werden kann.

Die Erfindung setzt sich die Aufgabe, das sogenannte Bewegungslichtfeld, welches sich aus der Relativbewegung zwischen einem Gegenstand im Aufnahmebereich und einen diesen Gegenstand abbildenden Flächensensor ergibt, zu ermitteln, wobei der zur Abbildung des Lichtfeldes verwendete Speicherplatz gegenüber dem Stand der Technik verringert ist.

Die Erfindung löst diese Aufgabe bei einem Verfahren der eingangs genannten Art mit dem kennzeichnenden Merkmals des Patentanspruches 1.

Erfindungsgemäß ist es somit vorteilhaft möglich, die Bewegungslichtfelder von Gegenständen zu ermitteln, die durch den Aufnahmebereich eines Sensors mittels einer Relativbewegung bewegt werden. Die durch die Aufnahme ermittelten und vom erfindungsgemäßen Verfahren zur Verfügung gestellten Daten beinhalten lediglich eine dreidimensionale Datenstruktur, die gegenüber den vierdimensionalen Bewegungslichtfeldern von aufgenommenen Gegenständen einen um eine Größenordnung verringerten Speicheraufwand oder Speicherplatz benötigt.

Eine vorteilhafte Synchronisierung zur Aufnahme präziser Bewegungslichtfelder sieht vor, dass der Zeilenabstand zwischen je zwei benachbarten Aufnahme-Zeitpunkten, zu denen Sensormesswerte ermittelt werden, auf diejenige Verschiebung festgesetzt wird, in der sich der Gegenstand jeweils um den Abstand je zweier benachbarter Beobachtungen in Transportrichtung fortbewegt hat.

Ein bevorzugtes Speicherlayout zur Aufnahme und Weiterverarbeitung der ermittelten Bilddaten sieht vor, dass die Lichtfeld-Datenstruktur als Ringspeicher der Größe n x m x (p + m - 1) ausgeführt ist, wobei jeder Eintrag in den Ringspeicher entweder ein Helligkeitswert oder ein Farbwerte-Tripel ist.

Um ein Bild des Gegenstandes zu erhalten, das in jedem Punkt eine optimale Bildschärfe aufweist, kann vorgesehen sein, dass ein Abstandswert $\Delta$ als ganze Zahl mit einem Wert größer als 1 festgelegt wird, wobei jede $\Delta$-te Sensorzeile ausgewählt wird und der Sensorzeile mit dem Zeilenindex $i_{P} = o + x \cdot \Delta$ der Auswahlindex zugeordnet wird, wobei o einem ganzzahligen Offset-Wert entspricht.

Um auf die Eigenheiten eines Zeilensensors, der eine Farbfilterbeschichtung nach dem Bayer-Muster aufweist besser eingehen zu können, kann vorgesehen sein, dass eine Farb-Lichtfeld-Datenstruktur $L = (L_{R}, L_{G}, L_{B})$ (eines Flächensensors mit Farbfilterbeschichtung nach dem Bayer-Muster erzeugt wird, wobei separat für jede Farbe jeweils mit allen für diese Farbe zur Verfügung stehenden Pixeln jeweils eine eigene Lichtfeld-Datenstruktur erzeugt wird, wobei einzelne Einträge bei Fehlen von Farb- und Helligkeitsinformationen undefiniert bleiben und anschließend für Spalten mit abwechselnder Grün/Blau-Filteranordnung, fehlende Farbinformation nach

$$L_{G}(i_{S}, i_{T}, i_{P}) = ( L_{G}(i_{S-1}, i_{T}, i_{P}) + L_{G}(i_{S+1}, i_{T}, i_{P}) ) / 2$$

$$L_{B}(i_{S}, i_{T}, i_{P}) = ( L_{B}(i_{S-1}, i_{T}, i_{P}) + L_{B}(i_{S+1}, i_{T}, i_{P}) ) / 2$$

bestimmt wird, und

wobei für den Fall, dass die die jeweilige Position mit einem Grünfilter versehen ist, der Anteil $L_R$ des roten Lichts wie folgt bestimmt wird: $L_R(i_S,i_T,i_P)=(L_R(i_S,i_T,i_{P-1}) + L_R(i_S,i_T,i_{P+1})) / 2$, und

wobei für den Fall, dass die die jeweilige Position mit einem Blaufilter versehen ist, der Anteil $L_R$ des roten Lichts wie folgt bestimmt wird: $L_R(i_S,i_T,i_P)=(L_R(i_{S-1},i_T,i_{P-1})+ L_R(i_{S-1},i_T,i_{P+1})+ L_R(i_{S+1},i_T,i_{P-1})+ L_R(i_{S+1},i_T,i_{P+1})) / 4$

und für Spalten mit abwechselnder Grün/Rot-Filteranordnung, fehlende Farbinformation gemäß

$$L_G(i_S,i_T,i_P)=( L_G(i_{S-1},i_T,i_P) + L_G(i_{S+1},i_T,i_P) ) / 2$$

$$L_R(i_S,i_T,i_P)=( L_R(i_{S-1},i_T,i_P) + L_R(i_{S+1},i_T,i_P) ) / 2$$

bestimmt wird, und

wobei für den Fall, dass die die jeweilige Position mit einem Grünfilter versehen ist, der Anteil $L_B$ des blauen Lichts wie folgt bestimmt wird:

$$L_B(i_S,i_T,i_P)=( L_B(i_S,i_T,i_{P-1}) + L_B(i_S,i_T,i_{P+1}) ) / 2,$$

und

wobei für den Fall, dass die die jeweilige Position mit einem Rotfilter versehen ist, der Anteil $L_B$ des blauen Lichts wie folgt bestimmt wird:

$$L_B(i_S,i_T,i_P)=( L_B(i_{S-1},i_T,i_{P-1}) + L_B(i_{S-1},i_T,i_{P+1}) + L_B(i_{S+1},i_T,i_{P-1}) + L_B(i_{S+1},i_T,i_{P+1}) ) / 4.$$

Ein bevorzugtes Ausführungsbeispiel wird anhand der folgenden Figuren näher dargestellt. **Fig. 1a** zeigt eine Transportvorrichtung sowie einen auf dieser Transportvorrichtung transportierten Gegenstand sowie eine Aufnahmeeinheit mit einem Zeilensensor. **Fig. 1b** zeigt einen Flächensensor umfassend eine Anzahl von rasterförmig in Zeilen und Spalten angeordneten Sensorpixeln. **Fig. 1c** zeigt schematisch die Sehstrahlen der einzelnen Sensorpixel des Zeilensors. **Fig. 2a** zeigt die Aufnahme eines Gegenstandspunktes zu unterschiedlichen Zeitpunkten. In **Fig. 2b** ist eine schematische Darstellung angegeben, die die Aufnahme eines Gegenstands aus unterschiedlichen Blickwinkeln zeigt. **Fig. 3a bis 3c** zeigen einzelne im Zuge der Aufnahme ausgeführte Aufnahmeergebnisse. In den **Fig. 4a bis 4d** ist die Lichtfelddatenstruktur sowie die Eintragung der ermittelten Sensormesswerte in die Lichtfelddatenstruktur zu unterschiedlichen Zeitpunkten dargestellt.

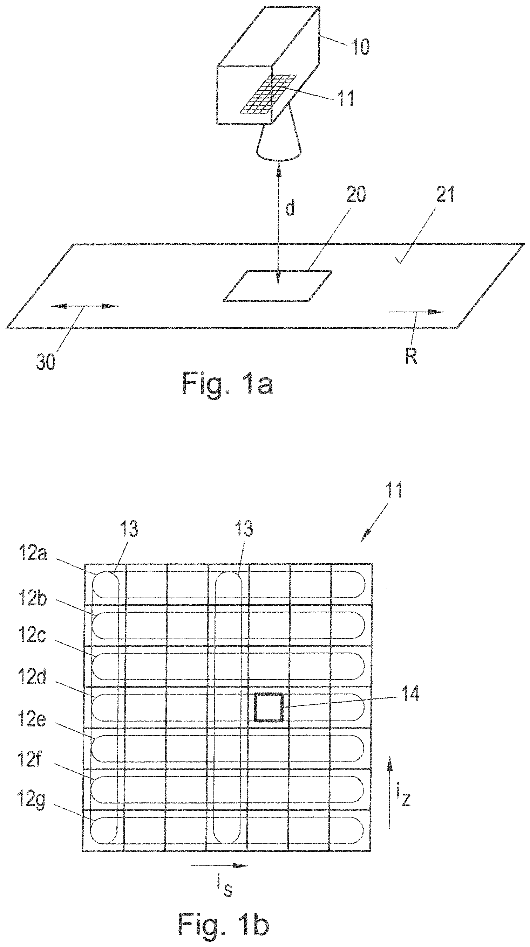

Die in **Fig. 1a** dargestellte bevorzugte Ausführungsform der Erfindung, verwendet eine Transporteinrichtung 30 zum Transport eines Gegenstandes 20 durch den Aufnahmebereich einer Bildaufnahmeeinheit 10. Diese Bildaufnahmeeinheit 10 weist einen Flächensensor 11 auf, der eine Anzahl von rasterförmigen Zeilen 12a...12g und Spalten 13 angeordneten Sensorpixeln 14 umfasst (**Fig. 1b**). Die Sensorpixel 14 weisen entsprechend ihrer Anordnung im Raster des Flächensensors 11 jeweils einen Zeilenindex $i_Z$, der die jeweilige Zeile 12 im Raster sowie einen Spaltenindex $i_S$, der die jeweilige Spalte 13 im Raster angibt, auf.

Die in **Fig. 1a** dargestellte Vorrichtung weist eine Fördereinheit 30 auf, mittels der ein Gegenstand 20 durch den Aufnahmebereich der Bildaufnahmeeinheit 10 befördert wird. Als Gegenstand 20 wird im vorliegenden Ausführungsbeispiel eine Banknote oder ein sonstiges Druckwerk herangezogen, das im Wesentlichen flach ausgebildet ist. Der Gegenstand 20 wird in einer Gegenstandsebene 21 relativ zur Bildaufnahmeeinheit in einem vorgegebenen Abstand d bewegt. Dabei vollführt der Gegenstand 20 gegenüber der Bildaufnahmeeinheit 10 eine translatorische Relativbewegung, wobei der Gegenstand 20 parallel zur Richtung der Spalten des Flächensensors 11 bewegt wird. Die Gegenstandsebene 21 steht im vorliegenden Ausführungsbeispiel normal zur optischen Achse der Bildaufnahmeeinheit 10 und ist im Bezug auf diese optische Achse gegenüber der Bildaufnahmeeinheit 10 mit einem Abstand d beabstandet.

Im vorliegenden Ausführungsbeispiel weist der Flächensensor 11, wie in **Fig. 1b** dargestellt, eine Vielzahl von rasterförmig in Zeilen 12 und Spalten 13 angeordneten Sensorpixeln 14 auf. Durch die rasterförmige Anordnung kann jedem der Sensorpixel 14 jeweils ein Zeilenindex $I_Z$ sowie ein Spaltenindex $I_S$ zugeordnet werden. Die Anzahl der im vorliegenden Ausführungsbeispiel verwendeten Spalten 13 bestimmt die Auflösung, mit der der Gegenstand 20 normal zur Fortbewegungsrichtung R aufgenommen wird. Die Anzahl der Zeilen 12a bis 12g bestimmt die Anzahl und Lage der unterschiedlichen Blickwinkel, unter denen der Gegenstand im Zuge seiner Relativbewegung gegenüber der Bildaufnahmeeinheit aufgenommen wird.

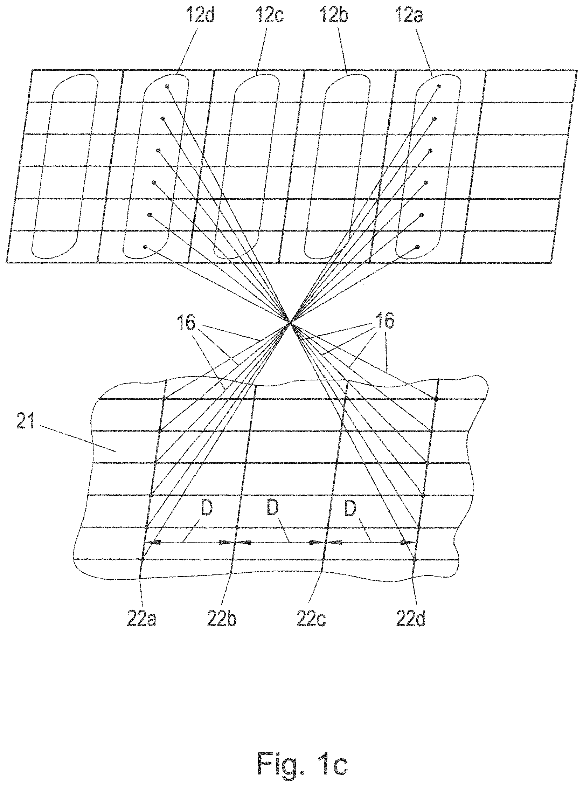

In **Fig. 1c** ist schematisch die Lage der Sehstrahlen 16 der einzelnen Sensorpixel dargestellt. Hierbei ist zu erkennen, dass die Sehstrahlen der Sensorpixel jeder Zeile, z.B. der Zeile 12b, die Gegenstandsebene 21 jeweils auf parallelen, zur Transportrichtung R normalen Geraden 22b schneiden. Jeder Zeile 12a, 12b, 12c des Flächensensors 11 kann damit jeweils genau eine Gerade 22a, ..., 22c auf der Gegenstandsebene 21 zugeordnet werden, auf der die jeweiligen Schnittpunkte der Sehstrahlen der Sensorpixel der jeweiligen Zeile mit der Gegenstandsebene 21 liegen. Diese Geraden 22a, 22b, 22c liegen zu den jeweils benachbarten Geraden 22a, ..., 22c parallel und weisen zueinander jeweils gleiche Abstände D auf.

Wird der Gegenstand 20 bei seiner Relativbewegung entlang der Fortbewegungsrichtung R gegenüber der Bildaufnahmeeinheit 10 bewegt, so wird er zu unterschiedlichen Zeitpunkten t, t+1, t+2 ... jeweils von unterschiedlichen Sensorzeilen $I_Z$ unter einem unterschiedlichen Blickwinkel $\alpha 1$, $\alpha 2$ usw. abgebildet.

Mit dem im Folgenden dargestellten Vorgehen wird erreicht, dass für jeden aufgenommenen Gegenstandspunkt des Gegenstands 20 jeweils Aufnahmen zur Verfügung stehen, die diesen aus unterschiedlichen Winkeln $\alpha 1$ bis $\alpha 5$ zeigen und somit ein Bewegungslichtfeld des Gegenstands 20 ergeben.

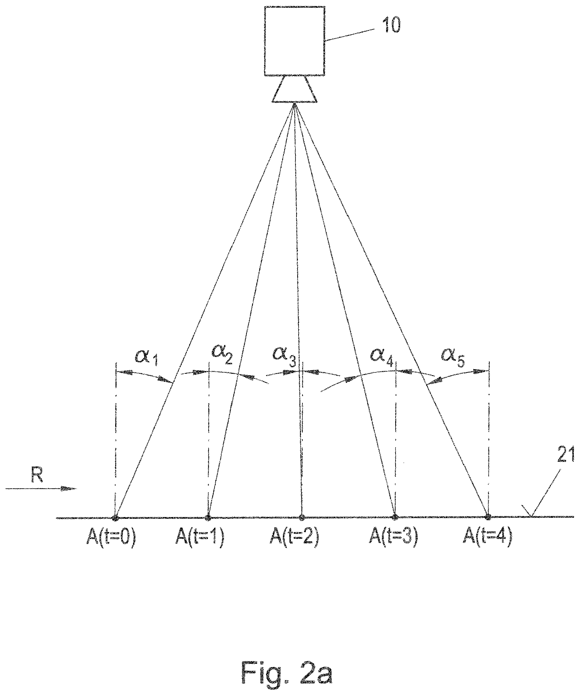

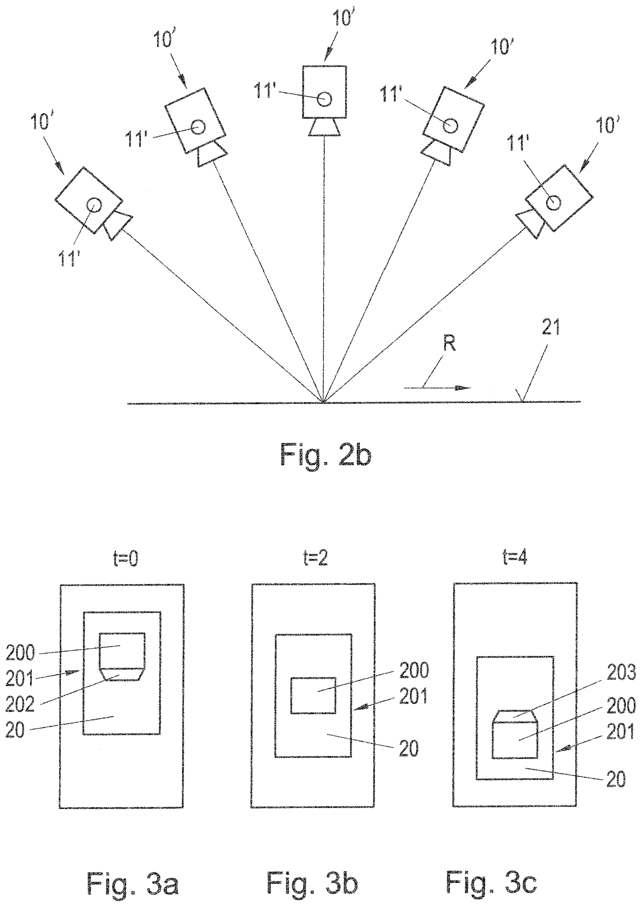

Mit diesem Vorgehen ist es möglich, eine Wirkung zu erzielen, die der in **Fig. 2b** dargestellten Aufnahmevorrichtung entspricht, wobei jede der in **Fig. 2b** dargestellten Aufnahmeeinrichtungen 10' jeweils einen Zeilensensor 11' aufweist, der normal zur Fortbewegungsrichtung sowie zur Sichtebene der **Fig. 2b** steht.

In den **Fig. 3a, 3b und 3c** sind jeweils Aufnahmen eines Gegenstandes 20 mit einer auf diesem befindlichen Erhebung 200 abgebildet. Während sich das Aussehen des in der Gegenstandsebene 21 liegenden Grundkörpers 201 des Gegenstands im Verlauf der Zeit nicht ändert, zeigt die Abbildung der auf dem Gegenstand 20 befindlichen Erhebung 200 doch deutliche Unterschiede, die darauf zurückzuführen sind, dass die Erhebung 200 aus der Gegenstandsebene 21 herausragt. Insbesondere können in den **Fig. 3a und 3c** aufragende Seitenflächen 202, 203 erkannt werden, die aus einer in **Fig. 3b** dargestellten Draufsicht auf die Erhebung 200 nicht erkennbar sind.

In einem ersten Schritt wird eine dem Lichtfeld des Gegenstands 20 entsprechende und diesen enthaltende dreidimensionale Lichtfelddatenstruktur erstellt. Hierbei handelt es sich um ein dreidimensionales Datenfeld bzw. Array der Größe n x m x (p + m - 1). Die Einträge der Lichtfelddatenstruktur L stellen jeweils von den Sensorpixeln 14 ermittelte Farb- oder Helligkeitswerte dar. Die Feldlänge n entspricht der Länge der Zeilen 12 bzw. der Anzahl der Spalten. Die Feldabmessung m entspricht der Länge der Spalten 13 bzw. der Anzahl der Zeilen. Die Feldabmessung p wird auf einen vorgegebenen, einem maximalen Zeitindex entsprechenden Wert gesetzt, der im vorliegenden Ausführungsbeispiel um die um 1 verminderte Anzahl m der Zeilen 12 erhöht ist. Bei der im vorliegenden Ausführungsbeispiel verwendeten Lichtfelddatenstruktur haben n, m, und p die Werte 2000, 9 und 9. Dies bedeutet, dass jede Gegenstandszeile aus p=9 von einander unabhängigen Blickwinkeln dargestellt wird, alle m=9 Sensorzeilen verwenden werden und zu jedem Zeitpunkt ein Speicher von 2000 * 9 * 8 Pixeln gefüllt ist. Falls alle Ansichten eines Bildes mit Gesamtzeilenanzahl von z.B. 5000 Zeilen, wobei zu jedem Aufnahmezeitpunkt p Ansichten der Objektzeile gespeichert werden müssen, ergeben sich dann 5000 * 2000 * 9 Pixelmesswerte.

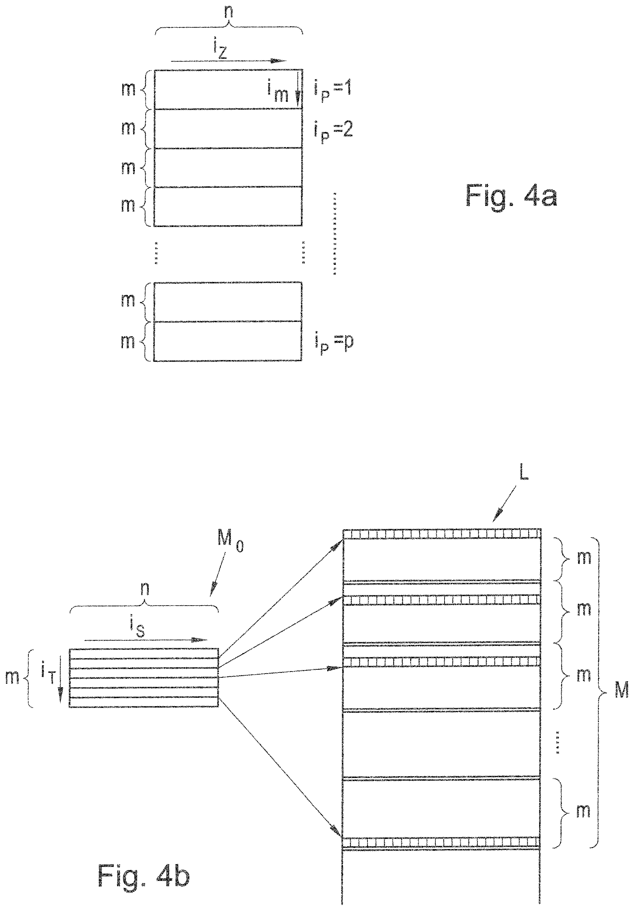

Die hier verwendete Lichtfelddatenstruktur L ist in **Fig. 4a** schematisch dargestellt, wobei die dritte, durch den Zeitindex $i_P$ dargestellte Koordinate der Lichtfelddatenstruktur durch Untereinanderreihung dargestellt ist.

Im Zuge der Relativbewegung des Gegenstands 20 gegenüber der Bildaufnahmeeinheit 10 wird eine Anzahl von Aufnahmen erstellt, denen jeweils ein Zeitindex $i_T$ zugeordnet wird, der im vorliegenden Ausführungsbeispiel einen Wert zwischen 1 und m aufweist. Diese Aufnahmen werden zu vorgegebenen Zeitpunkten $t_1$, ..., $t_m$ vorgenommen, die im vorliegenden Ausführungsbeispiel jeweils gleiche Abstände zum jeweils nachfolgenden Aufnahmezeitpunkt aufweisen. Die jeweils zum selben Zeitpunkt t Sensormesswerte werden in eine gemeinsame Datenstruktur $M_{iT}$ ($i_Z$, $i_S$). Die einzelnen Datenstrukturen $M_0$, $M_1$; ..., $M_P$ von Sensormesswerten, die zu den Zeitpunkten $t_1$, ..., $t_m$ aufgenommen werden, sind in den **Fig. 4b bis 4d** dargestellt. Jede Datenstruktur $M_{iT}$ ($i_Z$, $i_S$) von abgespeicherten Sensormesswerten weist dabei jeweils so viele Datenfelder auf, wie mit dem Flächensensor 11 bei einer Aufnahme aufgenommen werden können. Dabei entspricht der Index $i_Z$ dem Zeilenindex des jeweiligen den Sensormesswert erstellenden Pixels und der Index $i_S$ dem Spaltenindex des den jeweiligen Sensormesswert erstellenden Sensorpixels 14.

Wie in **Fig. 4b** dargestellt, werden die Sensormesswerte der ersten Zeile des in **Fig. 4b** dargestellten Feldes von Sensormesswerten der Lichtfelddatenstruktur L an der Stelle L($i_S$, 0, 0) eingetragen. Die zweite Zeile des Feldes $M_0$ von Sensormesswerten wird entsprechend in die Zeile L ($i_S$, 1, 1) der Lichtfelddatenstruktur L eingetragen usw. Die einzelnen Sensormesswerte $M_0$ ($i_Z$, $i_S$) werden zum Zeitpunkt $t_0$ mit dem Zeitindex $i_T$ = 0 gemäß der Vorschrift L($i_S$, $i_Z$, $i_Z$) : = $M_0$ ($i_S$, $i_Z$) in die Lichtfelddatenstruktur eingetragen, wobei $i_Z$ = 0 ... m-1. Die letzte Zeile des Feldes $M_0$ von Sensormesswerten wird entsprechend in die Zeile L ($i_S$, m-1, m-1) eingetragen.

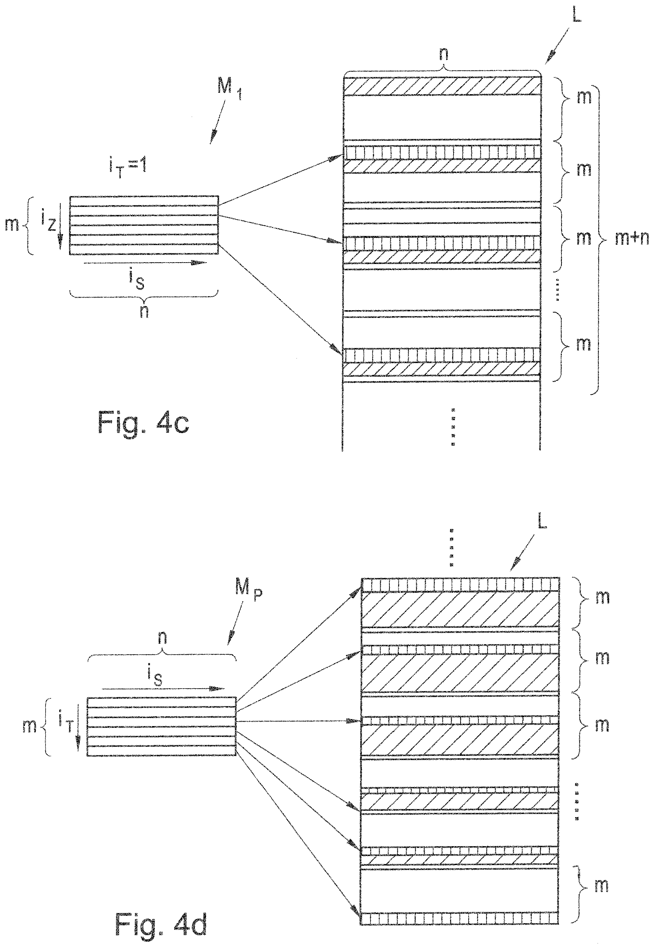

Wie in **Fig. 4c** dargestellt, werden die Sensormesswerte der ersten Zeile des in **Fig. 4c** dargestellten Feldes von Sensormesswerten der Lichtfelddatenstruktur L an der Stelle L($i_S$, 0, 1) eingetragen. Die zweite Zeile des Feldes $M_1$ von Sensormesswerten wird entsprechend in die Zeile L ($i_S$, 1, 2) der Lichtfelddatenstruktur L eingetragen usw. Die einzelnen Sensormesswerte $M_1$ ($i_Z$, $i_S$) werden zum Zeitpunkt $t_1$ mit dem Zeitindex $i_T$ = 1 gemäß der Vorschrift L($i_S$, $i_Z$, $i_Z$ + 1) : = $M_1$ ($i_S$, $i_Z$) in die Lichtfelddatenstruktur eingetragen, wobei $i_Z$ = 0 ... m-1. Die letzte Zeile des Feldes $M_1$ von Sensormesswerten wird entsprechend in die Zeile L ($i_S$, m-1, m) eingetragen.

Wie in **Fig. 4d** dargestellt, werden die Sensormesswerte der ersten Zeile des in **Fig. 4d** dargestellten Feldes von Sensormesswerten der Lichtfelddatenstruktur L an der Stelle L($i_S$, 0, p) eingetragen. Die zweite Zeile des Feldes $M_p$ von Sensormesswerten wird entsprechend in die Zeile L ($i_S$, 1, p + 1) der Lichtfelddatenstruktur L eingetragen usw. Die einzelnen Sensormesswerte $M_p$ ($i_Z$, $i_S$) werden zum Zeitpunkt $t_p$ mit dem Zeitindex $i_T$ = p gemäß der Vorschrift L($i_S$, $i_Z$, $i_Z$ + p) : = $M_p$ ($i_S$, $i_Z$) in die Lichtfelddatenstruktur eingetragen, wobei $i_Z$ = 0 ... m-1. Die letzte Zeile des Feldes $M_p$ von Sensormesswerten wird entsprechend in die Zeile L ($i_S$, m-1, p+m-1) eingetragen.

Die in den jeweiligen Schritten neu eingetragenen Zeilen der Lichtfelddatenstruktur L sind vertikal schraffiert dargestellt, die bereits befüllten Zeilen der Lichtfelddatenstruktur L sind schräg schraffiert dargestellt.

Besonders vorteilhaft ist es auch, wenn für die Speicherung des Lichtfelds die Lichtfelddatenstruktur L ($i_S$, $i_Z$, $i_T$) hinsichtlich des dritten Index $i_T$ als Ringspeicher ausgebildet ist, wobei in diesem Fall laufend Lichtdatenfelder erstellt werden können, ohne über die Speichergrenzen zu schreiben.

Selbstverständlich ist es nicht erforderlich, dass jede einzelne Zeile für die Erstellung des Lichtfeldes des Gegenstandes herangezogen wird. In manchen Fällen ist es günstiger, um eine größere Winkelauflösung der Lichtfelddatenstruktur zu erreichen, voneinander entfernte Zeilen zu verwenden. Bei der folgenden beschriebenen bevorzugten Ausführungsform der Erfindung ist daher vorgesehen, nicht jede einzelne Zeile für die Bildung der Lichtfelddatenstruktur L heranzuziehen. Vielmehr ist es auch möglich, um die Lichtfelddatenstruktur klein zu halten und Speicher zu sparen, nur ausgewählte Zeilen zu verwenden. Im vorliegenden Ausführungsbeispiel wird zur Kennzeichnung der ausgewählten Zeilenauswahlindex erstellt und den jeweils ausgewählten Zeilen zugeordnet. Der Auswahlindex wird dabei fortlaufend von 1 bis p, wobei p die Anzahl der ausgewählten Zeilen entspricht, vergeben, wobei Zeilen mit einem kleineren Auswahlindex auch jeweils ein kleinerer Zeilenindex zugewiesen ist.

Typischerweise wird vereinfacht vorgesehen, dass ein Abtastwert $\Delta$ vorgegeben wird, der einer ganzen Zahl größer 1 entspricht. Im vorliegenden Ausführungsbeispiel wurde der Abtastwert $\Delta$ auf 8 gesetzt, dies bedeutet, dass für die Erstellung der Lichtfelddatenstruktur jede achte Zeile herangezogen wird. Für die genaue Festlegung der Zeilen wird ein Offset-Wert o festgelegt, der angibt, an welcher Position sich die einzelnen Zeilen befinden. Der Sensor Zeile 12a...12g mit dem Zeilenindex ip = o + x * $\Delta$ wird dabei der Auswahlindex x zugeordnet. Im vorliegenden Ausführungsbeispiel wird o der Wert -4 zugewiesen. Die Zeile mit dem Zeilenindex 1 ist im folgenden Fall daher die Zeile 4. Die Zeile mit dem Auswahlindex 2 weist den Zeilenindex ip=12 auf usw.

Darüber hinaus ist es selbstverständlich auch möglich, eine Lichtfelddatenstruktur zu erstellen, deren Auflösung in Richtung des Winkels inhomogen ist, wobei im Bereich der Mitte, der typischerweise eine hohe Aufnahmegenauigkeit und geringe Verzerrungen aufweist eine größere Anzahl von Zeilen ausgewählt wird und im Randbereich, in dem möglicherweise Aufnahmeverzerrungen aufgrund der Optik bestehen eine geringere Anzahl von Zeilen ausgewählt wird. In diesem Fall wird der Auswahlindex x wiederum ansteigend den Zeilen mit ansteigendem Zeilenindex zugewiesen, in dem der ersten selektierten Zeile mit dem niedrigsten Zeilenindex unter den selektierten Zeilen der Wert 1 zugewiesen wird.

Eine weitere bevorzugte Ausführungsform der Erfindung ermöglicht die Erstellung einer Farblichtfelddatenstruktur L ($L_R$, $L_G$, $L_B$) umfassend die jeweils Lichtfelddatenstrukturen $L_R$, $L_G$, $L_B$ für jeden einzelnen Farbkanal separat. Der für die Erstellung verwendete Flächensensor 11 weist für dieses Ausführungsbeispiel eine Farbfilterbeschichtung mit Bayer-Muster auf. Dabei besteht eine Anzahl von Spalten mit abwechselnder Grün-Blaufilteranordnung und eine Anzahl von Spalten mit abwechselnder Grün-Rotfarbfilteranordnung. Da nicht für jede Spalte, für jeden Farbkanal ein Farb- und Helligkeitswert zur Verfügung steht, bleiben einzelne Werte der Lichtfelddatenstrukturen $L_R$, $L_G$, $L_B$ undefiniert. Fehlende Farb- und Helligkeitsinformationen können bei Spalten mit für benachbarte Zeilen abwechselnder Grün/Blau-Farbfilterinformation gemäß den folgenden Zuordnungsvorschriften durch Interpolation ermittelt bzw. ergänzt werden.

$$L_G(i_S, i_T, i_P) = (L_G(i_{S-1}, i_T, i_P) + L_G(i_{S+1}, i_T, i_P)) / 2$$

$$L_B(i_S, i_T, i_P) = (L_B(i_{S-1}, i_T, i_P) + L_B(i_{S+1}, i_T, i_P)) / 2$$

An einer Position, an der sich ein Pixel mit vorgeschalteten Grünfilter befindet, wird der Rotanteil wie folgt bestimmt:

$$L_R(i_S, i_T, i_P) = (L_R(i_S, i_T, i_{P-1}) + L_R(i_S, i_T, i_{P+1})) / 2$$

An einer Position, an der sich ein Pixel mit vorgeschalteten Blaufilter befindet, wird der Rotanteil wie folgt bestimmt:

$$L_R(i_S,i_T,i_P)=( L_R(i_{S-1},i_T,i_{P-1}) + L_R(i_{S-1},i_T,i_{P+1}) + L_R(i_{S+1},i_T,i_{P-1}) + L_R(i_{S+1},i_T,i_{P+1}) ) / 4$$

Entsprechend können für Spalten mit für benachbarte Zeilen abwechselnder Grün/Rot-Farbfilteranordnung die fehlenden Farb- und Helligkeitswerte entsprechend den folgenden Zuordnungsvorschriften ergänzt werden:

$$L_G(i_S,i_T,i_P)=( L_G(i_{S-1},i_T,i_P) + L_G(i_{S+1},i_T,i_P) ) / 2$$

$$L_R(i_S,i_T,i_P)=( L_R(i_{S-1},i_T,i_P) + L_R(i_{S+1},i_T,i_P) ) / 2$$

An einer Position, an der sich ein Pixel mit vorgeschalteten Grünfilterbefindet, wird der Blauanteil wie folgt bestimmt:
$L_B(i_S,i_T,i_P)=( L_B(i_S,i_T,i_{P-1}) + L_B(i_S,i_T,i_{P+1}) ) / 2$
An einer Position, an der sich ein Pixel mit vorgeschalteten Rotfilter befindet, wird der Blauanteil wie folgt bestimmt:
$L_B(i_S,i_T,i_P)=( L_B(i_{S-1},i_T,i_{P-1}) + L_B(i_{S-1},i_T,i_{P+1}) + L_B(i_{S+1},i_T,i_{P-1}) + L_B(i_{S+1},i_T,i_{P+1})) / 4$
Alternativ zu der vorgeschlagenen Vorgangsweise zur Herstellung einer Farblichtfelddatenstruktur kann auch ein anderes dem Stand der Technik entsprechende Verfahren zum Demosaicking herangezogen werden.

**Patentansprüche**

1. Verfahren zur Ermittlung des Lichtfeldes eines Gegenstands (20) mittels einer einen Flächensensor (11) aufweisenden Bildaufnahmeeinheit (10),

   - wobei der Flächensensor (11) eine Anzahl von rasterförmig in Zeilen (12) und Spalten (13) angeordneten Sensorpixeln (14) aufweist, denen entsprechend ihrer Anordnung jeweils ein Zeilenindex ($i_Z$) und ein Spaltenindex ($i_S$) zugewiesen wird,
   - wobei der Gegenstand (1) und der Flächensensor (11) eine translatorische Relativbewegung parallel zur Richtung der Spalten (13) des Flächensensors vollführen,
   - wobei der Gegenstand (20) auf einer zur Bildaufnahmeeinheit (10) mit einem vorgegebenen Abstand (d) beabstandet liegenden Gegenstandsebene (21) relativ zur Bildaufnahmeeinheit (10) bewegt wird, wobei der Gegenstand (20) durch den Aufnahmebereich der Bildaufnahmeeinheit (10) bewegt wird, und
   - wobei mehrere Einzelzeilenbilder einer bestimmten Objektzeile zu unterschiedlichen Zeitpunkten ($t_1, ..., t_m$) aufgenommen werden und der Winkel zur Oberflächennormale des Gegenstandes für

   die Einzelzeilenbilder jeweils unterschiedlich ist,

   - wobei ein Teilbereich umfassend eine Anzahl von Zeilen (12a...12g) des Flächensensors selektiert wird und den selektierten Zeilen (12a...12g) jeweils ein Auswahlindex zugeordnet ist, wobei der Auswahlindex jeweils ansteigend den Zeilen mit ansteigenden Zeilenindex ($i_Z$) zugewiesen wird, wobei der Auswahlindex der ersten selektierten Zeile mit dem niedrigsten Zeilenindex unter den selektierten Zeilen den Wert 1 aufweist und der Auswahlindex der selektierten Zeile mit dem höchsten Zeilenindex unter den selektierten Zeilen dem Wert p der Anzahl der selektierten Zeilen entspricht,
   **dadurch gekennzeichnet,**
   - **dass** eine dem Lichtfeld des Gegenstands (20) entsprechende dreidimensionale Lichtfeld-Datenstruktur $L(i_n, i_m, i_p)$ erstellt wird, deren Einträge jeweils Farb- oder Helligkeitswerte sind,
   - wobei n der Länge der Zeilen (12) entspricht,
   - **dass** zu vorgesetzten Zeitpunkten ($t_1, ..., t_m$) mit einem Zeitindex ($i_T = 1, ..., m$) mit den Sensorpixeln (14) der selektierten Zeilen jeweils Sensormesswerte $M_{iT}(i_P, i_S)$ erstellt werden, wobei jedem Sensormesswert $M_{iT}(i_P, i_S)$ jeweils der Zeitindex ($i_T$) seiner Aufnahme sowie der Auswahlindex ($i_P$) der Zeile und der Spaltenindex ($i_S$) des den Sensormesswert ermittelnden Sensorpixels (14) zugeordnet werden, und
   - **dass** die ermittelten Sensormesswerte $M_{iT}(i_p, i_S)$ in die Lichtfeld-Datenstruktur (L) gemäß der folgenden Vorschrift eingetragen werden: $L(i_S, i_T, i_P) := \{M_{iT}(i_P, i_S)\}$ wobei $i_P = 1...p$.

2. Verfahren nach Anspruch 1, **dadurch gekennzeichnet, dass** der Zeilenabstand (d) zwischen je zwei benachbarten Aufnahme-Zeitpunkten ($t_i, t_{i+1}$), zu denen Sensormesswerte (M) ermittelt werden, auf diejenige Verschiebung festgesetzt wird, in der sich der Gegenstand (20) jeweils um den Abstand je zweier benachbarter Beobachtungen (22a, 22b, 22c, ...) in Transportrichtung (R) fortbewegt hat.

3. Verfahren nach Anspruch 1 oder 2, **dadurch gekennzeichnet, dass** die Lichtfeld-Datenstruktur als Ringspeicher der Größe ausgeführt ist, wobei jeder Eintrag in den Ringspeicher entweder ein Helligkeitswert oder ein Farbwerte-Tripel ist.

4. Verfahren nach einem der vorangehenden Ansprüche, **dadurch gekennzeichnet, dass** ein Abstandswert $\Delta$ als ganze Zahl mit einem Wert größer als 1 festgelegt wird, wobei jede $\Delta$-te Sensorzeile (12a...12g) ausgewählt wird und der Sensorzeile (12a...12g) mit dem Zeilenindex $o+x*\Delta$ der Auswahlindex (x) zugeordnet wird, wobei o einem ganzzahligen Offset-Wert entspricht.

5. Verfahren nach Anspruch 1, **dadurch gekennzeichnet, dass** eine Farb-Lichtfeld-Datenstruktur $L= (L_R, L_G, L_B)$ eines Flächensensors (11) mit Farbfilterbeschichtung nach dem Bayer-Muster erzeugt wird, wobei separat für jede Farbe jeweils mit allen für diese Farbe zur Verfügung stehenden Pixeln jeweils eine eigene Lichtfeld-Datenstruktur $(L_R, L_G, L_B)$ erzeugt wird, wobei einzelne Einträge bei Fehlen von Farb- und Helligkeitsinformationen undefiniert bleiben und anschließend für Spalten mit abwechselnder Grün/Blau-Filteranordnung, fehlende Farbinformation nach

$$L_G(i_S,i_T,i_P)=( L_G(i_{S-1},i_T,i_P) + L_G(i_{S+1},i_T,i_P) ) / 2$$

$$L_B(i_S,i_T,i_P)=( L_B(i_{S-1},i_T,i_P) + L_B(i_{S+1},i_T,i_P) ) / 2$$

bestimmt wird, und
wobei für den Fall, dass die jeweilige Position mit einem Grünfilter versehen ist, der Anteil $L_R$ des roten Lichts wie folgt bestimmt wird, : $L_R(i_S,i_T,i_P)=(L_R(i_S,i_T,i_{P-1}) + L_R(i_S,i_T,i_{P+1})) / 2$, und wobei für den Fall, dass die die jeweilige Position mit einem Blaufilter versehen ist, der Anteil $L_R$ des roten Lichts wie folgt bestimmt wird: $L_R(i_S,i_T,i_P)=L_R(i_{S-1},i_T,i_{P-1}) + L_R(i_{S-1},i_T,i_{P+1}) + L_R(i_{S+},i_T,i_{P-1}) + L_R(i_{S+1},i_T,i_{P+1})) / 4$
und für Spalten mit abwechselnder Grün/Rot-Filteranordnung, fehlende Farbinformation gemäß

$$L_G(i_S,i_T,i_P)=( L_G(i_{S-1},i_T,i_P) + L_G(i_{S+1},i_T,i_P) ) / 2$$

$$L_R(i_S,i_T,i_P)=( L_R(i_{S-1},i_T,i_P) + L_R(i_{S+1},i_T,i_P) ) / 2$$

bestimmt wird, und
wobei für den Fall, dass die die jeweilige Position mit einem Grünfilter versehen ist, der Anteil $L_B$ des blauen Lichts wie folgt bestimmt wird

$$L_B(i_S,i_T,i_P)=( L_B(i_S,i_T,i_{P-1}) + L_B(i_S,i_T,i_{P+1}) ) / 2,$$

und
wobei für den Fall, dass die die jeweilige Position mit einem Rotfilter versehen ist, der Anteil $L_B$ des blauen Lichts wie folgt bestimmt wird

$$L_B(i_S,i_T,i_P)=( L_B(i_{S-1},i_T,i_{P-1}) + L_B(i_{S-1},i_T,i_{P+1}) + L_B(i_{S+1},i_T,i_{P-1}) + L_B(i_{S+1},i_T,i_{P+1}) ) / 4.$$

## Claims

1. Method for determining the light field of an object (20) by means of an image acquisition unit (10) comprising a surface sensor (11),

- wherein the surface sensor (11) comprises a number of sensor pixels (14) arranged in a grid-like manner in rows (12) and columns (13), which are each assigned, according to their arrangement, a row index ($i_Z$) and a column index ($i_S$),

- wherein the object (1) and the surface sensor (11) undergo a relative translational movement parallel to the direction of the columns (13) of the surface sensor,

- wherein the object (20) is moved relative to the image acquisition unit (10) on an object plane (21) spaced apart from the image acquisition unit (10) by a predetermined distance (d), wherein the object (20) is moved through the acquisition region of the image acquisition unit (10), and

- wherein a plurality of single-row images of a specific object row are acquired at different times ($t_1,..., t_m$) and the angle to the surface normal of the object is different for each of the single-row images,

- wherein a subregion comprising a number of rows (12a...12g) of the surface sensor is selected and the selected rows (12a...12g) are each assigned a selection index, wherein the selection index is incrementally assigned to the rows with increasing row index ($i_Z$), wherein the selection index of the first selected row with the lowest row index among the selected rows has the value 1 and the selection index of the selected row with the highest row index among the selected rows corresponds to the value p of the number of selected rows,

**characterised in that**

- a three-dimensional light field data structure $L(i_n, i_m, i_p)$ corresponding to the light field of the object (20) is created, the entries of which are colour and brightness values,

- wherein n represents the length of the rows (12),

- sensor readings $M_{iT}(i_p, i_s)$ are generated at preset times ($t_1,..., t_m$) with a time index ($i_T = 1,..., m$) with the sensor pixels (14) of the selected rows, wherein each sensor reading $M_{iT}(i_p, i_S)$ is in each case assigned the time index ($i_T$) of its acquisition and the selection index ($i_P$) of the row and the column index ($i_S$) of the sensor pixel (14) assigned to the sensor reading, and

- **in that** the determined sensor readings $M_{iT}(i_p, i_S)$ are entered into the light field data structure (L) according to the following rule. $L(i_S, i_T, i_P) = \{M_{iT}(i_P, i_S)\}$ where $i_P = 1...p$.

2. The method according to claim 1, **characterised in that** the row spacing (d) between each two neighbouring acquisition times ($t_i, t_{i+1}$), at which sensor readings (M) are determined, is set to that displacement by which the object (20) has moved forward in the transport direction (R) in each case by the spacing of each two neighbouring observations (22a, 22b, 22c,...).

3. The method according to claim 1 or 2, **characterised in that** the light field data structure is designed as a circular buffer of the variable, wherein each entry in the circular buffer is either a brightness value or a colour value triplet.

4. The method according to one of the preceding claims, **characterised in that** a spacing value $\Delta$ is specified as an integer with a value greater than 1, wherein each $\Delta$-th sensor row (12a...12g) is selected and the sensor row (12a...12g) is assigned the row index $o+x*\Delta$ of the selection index (x), where o is an integer offset value.

5. The method according to claim 1, **characterised in that** a colour light field data structure $L = (L_R, L_G, L_B)$ of a surface sensor (11) with colour filter coating is created according to the Bayer pattern, wherein an individual light field data structure ($L_R, L_G, L_B$) is created separately for each colour, with all the pixels available for these colours, wherein individual entries in the absence of colour and brightness information remain undefined and subsequently, for columns with alternate green/blue filter arrangement, missing colour information is determined according to

$$L_G(i_S,i_T,i_P)=(L_G(i_{S-1},i_T,i_P) + L_G(i_{S+1},i_T,i_P)) / 2$$

$$L_B(i_S,i_T,i_P)=(L_B(i_{S-1},i_T,i_P) + L_B(i_{S+1},i_T,i_P)) / 2$$

and

wherein for the case where the respective position is provided with a green filter, the proportion $L_R$ of red light is determined as follows: $L_R(i_S,i_T,i_P)=(L_R(i_S,i_T,i_{P-1}) + L_R(i_S,i_T,i_{P+1})) / 2$, and wherein for the case in which the respective position is provided with a blue filter, the proportion $L_R$ of red light is determined as follows: $L_R(i_S,i_T,i_P)=L_R(i_S,i_T,i_{P-1})+ L_R(i_{S-1},i_T,i_{P+1})+ L_R(i_{S+1},i_T,i_{P+1}) + L_R(i_{S+1},i_T,i_{P+1})/ 4$

and for columns with alternating green/red filter arrangement, missing colour information is determined according to

$$L_G(i_S,i_T,i_P)=(L_G(i_{S-1},i_T,i_P) + L_G(i_{S+1},i_T,i_P)) / 2$$

$$L_R(i_S,i_T,i_P)=(L_R(i_{S-1},i_T,i_P) + L_R(i_{S+1},i_T,i_P)) / 2$$

and

wherein for the case where the respective position is provided with a green filter, the proportion $L_B$ of blue light is determined as follows:

$$L_B(i_S,i_T,i_P)=(L_B(i_S,i_T,i_{P-1}) + L_B(i_S,i_T,i_{P+1})) / 2,$$

and wherein for the case where the respective position is provided with a red filter, the proportion $L_B$ of blue light is determined as follows:

$$L_B(i_S,i_T,i_P)=(L_B(i_{S-1},i_T,i_{P-1}) + L_B(i_{S-1},i_T,i_{P+1}) + L_B(i_{S+1},i_T,i_{P-1}) + L_B(i_{S+1},i_T,i_{P+1})) / 4.$$

**Revendications**

1. Procédé de détermination du champ lumineux d'un objet (20) au moyen d'une unité de capture d'image (10) présentant un capteur de surface (11),

   - dans lequel le capteur de surface (11) présente un certain nombre de pixels de capteur (14) disposés en forme de réseaux en lignes (12) et en colonnes (13), auxquelles, de façon correspondant à leur agencement, un indice de ligne ($i_Z$) et un indice de colonne ($i_S$) est attribué,
   - dans lequel l'objet (1) et le capteur de surface (11) effectuent un mouvement relatif de translation de manière parallèle à la direction des colonnes (13) du capteur de surface,
   - dans lequel l'objet (20) est déplacé sur un plan d'objet (21) reposant espacé d'une distance prédéfinie (d) de l'unité de capture d'image (10) par rapport à l'unité de capture d'image (10), dans lequel l'objet (20) est déplacé à travers la zone de capture de l'unité de capture d'image (10) et
   - dans lequel plusieurs dispositifs de formation de ligne individuels d'une ligne d'objet définie sont capturés à des instants différents ($t_1$, ..., $t_m$) et l'angle par rapport à la normale à la surface de l'objet pour le dispositif de formation de ligne individuel est respectivement différent,
   - dans lequel une zone partielle, comprenant un certain nombre de lignes (12a...12g) du capteur de surface, est sélectionnée et un indice de sélection est respectivement attribué aux lignes sélectionnées (12a...12g), dans lequel l'indice de sélection est attribué respectivement croissant aux lignes dotées d'indice de ligne croissant ($i_Z$), dans lequel l'indice de sélection de la première ligne sélectionnée avec l'indice de ligne le plus faible parmi les lignes sélectionnées présente la valeur de 1 et l'indice de sélection de la ligne sélectionnée avec l'indice de ligne le plus élevé parmi les lignes sélectionnées présente la valeur p qui correspond au nombre de lignes sélectionnées,
   **caractérisé en ce que**
   - une structure de données de champ lumineux tridimensionnelle $L(i_n, i_m, i_p)$ correspondant au champ lumineux de objet (20) est créée, dont les entrées sont respectivement des valeurs de luminosité ou de couleur,
   - dans lequel n correspond à la longueur des lignes (12),
   - **en ce que**, à des instants prédéfinis ($t_1$, ..., $t_m$), avec un indice temporel ($i_T$ = 1, ..., m), des valeurs de mesure de capteurs $M_{iT}(i_p, i_S)$ sont produites avec les pixels de capteur (14) des lignes sélectionnées, dans lequel, à chaque valeur de mesure de capteur $M_{iT}(i_p, i_S)$ sont attribués respectivement l'indice temporel ($i_T$) de sa capture ainsi que l'indice de sélection ($i_P$) de la ligne et l'indice de colonne ($i_S$) des pixels de capteur (14) déterminant la valeur de mesure de capteur et
   - **en ce que** les valeurs de mesure de capture $M_{iT}(i_P, i_S)$ déterminées sont inscrites dans la structure de données de champ lumineux (L) conformément à la consigne suivante : $L(i_S, i_T, i_P) := \{M_{iT}(i_P, i_S)\}$ où $i_P$ = 1...p.

2. Procédé selon la revendication 1, **caractérisé en ce que** l'espace de lignes (d) entre deux instants de capture

successifs ($t_i$, $t_{i+1}$), auxquels les valeurs de mesure de capteur (M) sont déterminées, est fixé au déplacement effectué par l'objet (20) respectivement sur la distance entre deux observations (22a, 22b, 22c, ...) consécutives dans la direction de transport (R).

3. Procédé selon la revendication 1 ou 2, **caractérisé en ce que** la structure de données de champ lumineux est réalisée comme une mémoire annulaire de tailles, dans lequel chaque entrée dans la mémoire annulaire est soit une valeur de luminosité soit un triple de valeur de couleur.

4. Procédé selon une des revendications précédentes, **caractérisé en ce qu'**une valeur de distance $\Delta$ est fixée comme un nombre entier avec une valeur supérieure à 1, dans lequel chaque $\Delta$-ième ligne de capteur (12a...12g) est choisie et la ligne de capteur (12a...12g) est affectée de l'indice temporel $o+x*\Delta$ de l'indice de sélection (x), où o correspond à une valeur de décalage entière.

5. Procédé selon la revendication 1, **caractérisé en ce qu'**une structure de données de champ lumineux de couleur L= ($L_R$, $L_G$, $L_B$) d'un capteur de surface (11) avec un revêtement à filtre de couleur est produite selon le motif de Bayer, dans lequel, séparément pour chaque couleur, respectivement avec tous les pixels à disposition pour ces couleurs, respectivement une structure de données de champ lumineux propre ($L_R$, $L_G$, $L_B$) est produite, dans lequel des entrées respectives en cas d'absence d'informations de luminosité et de couleur restent indéfinies et, ensuite, pour les colonnes avec un agencement de filtre vert/bleu alterné, des informations de couleur manquantes sont déterminées selon

$$L_G(i_S,i_T,i_P)=(L_G(i_{S-1},i_T,i_P) + L_G(i_{S+1},i_T,i_P)) / 2$$

$$L_B(i_S,i_T,i_P)=(L_B(i_{S-1},i_T,i_P) + L_B(i_{S+1},i_T,i_P)) / 2$$

et

dans lequel au cas où la position respective est dotée d'un filtre vert, la proportion $L_R$ de lumière rouge est déterminée comme suit : $L_R(i_S,i_T,i_P)=(L_R(i_S,i_T,i_{P-1}) + L_R(i_S,i_T,i_{P+1})) / 2$ et dans lequel au cas où la position respective est dotée d'un filtre bleu, la proportion $L_R$ de lumière rouge est déterminée comme suit : $L_R(i_S,i_T,i_P)=(L_R(i_{S-1},i_T,i_{P-1}) + L_R(i_{S-1},i_T,i_{P+1}) + L_R(i_{S+1},i_T,i_{P-1}) + L_R(i_{S+1},i_{T},i_{P+1})) / 4$

et pour les colonnes avec un agencement de filtre vert/rouge alterné, les informations de couleur manquantes sont déterminées selon

$$L_G(i_S,i_T,i_P)=(L_G(i_{S-1},i_T,i_P) + L_G(i_{S+1},i_T,i_P)) / 2$$

$$L_R(i_S,i_T,i_P)=(L_R(i_{S-1},i_T,i_P) + L_R(i_{S+1},i_T,i_P)) / 2$$

et

dans lequel au cas où la position respective est dotée d'un filtre vert, la proportion $L_B$ de la lumière bleue est déterminée comme suit

$$L_B(i_S,i_T,i_P)=(L_B(i_S,i_T,i_{P-1}) + L_B(i_S,i_T,i_{P+1})) / 2$$

et dans lequel au cas où la position est dotée d'un filtre rouge, la proportion $L_B$ de la lumière bleue est déterminée comme suit

$$L_B(i_S,i_T,i_P)=(L_B(i_{S-1},i_T,i_{P-1}) + L_B(i_{S-1},i_T,i_{P+1}) + L_B(i_{S+1},i_T,i_{P-1}) + L_B(i_{S+1},i_T,i_{P+1})) / 4.$$

Fig. 1a

Fig. 1b

Fig. 1c

Fig. 2a

Fig. 2b

Fig. 3a      Fig. 3b      Fig. 3c

Fig. 4a

Fig. 4b

Fig. 4c

Fig. 4d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MARC LEVOY et al.** Light Field Rendering. 01. Juli 1996, 1-12